(19) Europäisches Patentamt
European Patent Office
Office européen des brevets

(11) Veröffentlichungsnummer: **0 089 540**
**A1**

(12) # EUROPÄISCHE PATENTANMELDUNG

(21) Anmeldenummer: 83102203.3

(51) Int. Cl.³: **C 08 L 69/00**

(22) Anmeldetag: 07.03.83

(30) Priorität: 20.03.82 DE 3210284

(43) Veröffentlichungstag der Anmeldung: 28.09.83 Patentblatt 83/39

(84) Benannte Vertragsstaaten: BE CH DE FR GB IT LI NL

(71) Anmelder: BAYER AG
Zentralbereich Patente, Marken und Lizenzen
D-5090 Leverkusen 1, Bayerwerk(DE)

(72) Erfinder: Lindner, Christian, Dr.
Riehlerstrasse 200
D-5000 Köln 60(DE)

(72) Erfinder: Ott, Karl-Heinz, Dr.
Paul-Klee-Strasse 54
D-5090 Leverkusen 1(DE)

(72) Erfinder: Peters, Horst, Dr.
Winterberg 25
D-5090 Leverkusen 3(DE)

(72) Erfinder: Buekers, Josef
Kneinstrasse 58a
D-4150 Krefeld 1(DE)

(72) Erfinder: Neuray, Dieter, Dr.
140 Fairview Drive
New Martinsville West Virginia 26155(US)

(54) **Polycarbonatabmischungen.**

(57) Gegenstand der vorliegenden Erfindungen sind Mischungen aus

(a) thermoplastischen aromatischen Polycarbonaten mit $\overline{M}w$ (Gewichtsmittelmolekulargewichten) von 10 000 bis 200 000, vorzugsweise 20 000 bis 80 000 (ermittelt durch Messung der rel. Viskosität $\eta$ rel in $CH_2Cl_2$ bei 25°C und einer Konzentration von 0,5 g pro 100 ml $CH_2Cl_2$

(b) thermoplastischen Polymerisaten von $C_1$-$C_4$-Alkylestern der Methacrylsäure mit $\overline{M}w$ (Gewichtsmittelmolekulargewichten) von 10000 bis 1000000 (gemessen in DMF bei 25°C)

und

(c) teilchenförmigen Pfropfpolymerisaten von Methylmethacrylat auf einen teilchenförmigen, hochvernetzten Acrylsäurealkylester-Kautschuk, der gegebenenfalls noch einen vernetzten Dienkautschuk als inneren Kern enthalten kann, sowie deren Verwendung in thermoplastischen Formmassen auf Basis von ABS- oder SAN-Harzen.

EP 0 089 540 A1

BAYER AKTIENGESELLSCHAFT        5090 Leverkusen, Bayerwerk

Zentralbereich
Patente, Marken und Lizenzen   PS/ABc

# Polycarbonatabmischungen

Gegenstand der vorliegenden Erfindungen sind Mischungen aus

(a) thermoplastischen aromatischen Polycarbonaten mit $\bar{M}w$ (Gewichtsmittelmolekulargewichten) von 10 000 bis 200 000, vorzugsweise 20 000 bis 80 000 (ermittelt durch Messung der rel. Viskosität $\eta$ rel in $CH_2Cl_2$ bei 25°C und einer Konzentration von 0,5 g pro 100 ml $CH_2$ $Cl_2$,

(b) thermoplastischen Polymerisaten von $C_1$-$C_4$-Alkylestern der Methacrylsäure mit $\bar{M}w$ (Gewichtsmittelmolekulargewichten) von 10000 bis 1000000 (gemessen in DMF bei 25°C)

und

(c) teilchenförmigen Pfropfpolymerisaten von Methylmethacrylat auf einen teilchenförmigen, hochvernetzten Acrylsäurealkylester-Kautschuk, der gegebenenfalls noch einen vernetzten Dienkautschuk als inneren Kern enthalten kann.

Durch Schmelzmischung von Polycarbonat und Polymethacrylaten sind Formmassen zu erhalten, die deutliche Unverträglichkeitserscheinungen aufweisen, wodurch die mechanischen Eigenschaften von daraus hergestellten Formkörpern und deren Oberflächenbeschaffenheit gestört werden; diesen Effekt macht man sich zum Beispiel in Japanische Patentpublikation 16 063/72 zunutze: In dieser Patentanmeldung werden Polycarbonate mit perlartigem Glanz (also mit nicht homogener Oberflächenbeschaffenheit) dadurch erhalten, daß man sie mit Polymethylmethacrylat abmischt; eine derartige Oberflächenbeschaffenheit ist zwar für manche Anwendungen interessant, aber im mengenmäßig wichtigsten Thermoplastsektor werden Formkörper mit homonener, glatter Oberfläche verlangt. Will man Mischungen aus Polycarbonat und Methylmethacrylatpolymeren mit glatter Oberfläche herstellen, so gelingt das nur dann, wenn man Methacrylatpolymerisate mit relativ niedrigem Molekulargewicht und mit Gehalten von 10 bis 25 % eingebautem Fremdmonomer einsetzt; solche verbesserten Polycarbonatmischungen werden in der DOS 2 264 268 beschrieben.

In GB 1 182 807 wird beschrieben, die Eigenschaften von Polycarbonat/Polymethylmethacrylat-Mischungen dadurch zu verbessern, daß man ihnen kautschukartige Polymerisate zumischt, wie zum Beispiel Butadiencopolymere, Butadienpfropfpolymere oder Alkylacrylatcopolymere (wie unvernetzte Methylmethacrylat/Ethylacrylat-Copolymere oder vernetzte Polyacrylat-Kautschuke); Pfropfpolymerisate von Vinylmonomeren auf vernetzten Acrylatkautschuken

werden allerdings hier nicht verwendet. Die hier (in GB 1 182 807) beschriebenen Formmassen stellen Polymethacrylate mit verbesserter Wärmeformbeständigkeit dar: die Formmassen besitzen allerdings, ähnlich wie Polymethacrylate selbst, nur niedrige Kerbschlagzähigkeiten; die eingesetzten Butadienkautschuke in diesen Formmassen verbessern zwar deren Zähigkeit, reduzieren allerdings beträchtlich die Alterungsbeständigkeit der Formmassen.

Bekannt sind auch Mischungen von verschiedenen Methylmethacrylatharzen mit Polycarbonaten (siehe US-Patent 3 957 921), die perlartiges Aussehen mit guten Schlagzähigkeit verbinden.

Bekannt sind auch seit langem Mischungen von Polycarbonaten mit den verschiedensten Pfropfpolymerisaten (siehe beispielswise US-PS 3 130 177, US-PS 3 162 695, JA-Patent Publikation 11 496/67, US-PS 3 886 231, US-PS 3 663 471, JA-Patent Publikation 32 729/72, US-PS 3 655 824, US-PS 3 642 946, JA-Patent Publikation 41 424/72, DE-OS 2 264 104, US-PS 3 891 719 (Le A 14 617), US-PS 3 988 389 (Le A 14 751), JA-Offenlegungsschrift 630 57/75, US-PS 4 172 103 (Le A 15 024), US-PS 3 880 783 (Le A 15 108), US-PS 3 954 905 (Le A 15 106) und US-PS 3 947 524). Im Falle von US-PS 3 655 824 können diesen Abmischungen noch Polymethylmethacrylatharze zugemischt sein, ohne daß dazu nähere Einzelheiten über Mengen und zu erzielende Vorteile aufgeführt sind.

Bekannt sind auch Mischungen aus Polycarbonaten mit zwei oder mehr als zwei Polymerisaten (siehe JA-Offenlegungsschrift Nr. 73/43 449 und Nr. 75/10 347,

US-PS 3 873 641 (Le A 15 107), US-PS 4 148 842 und US-PS 4 260 693).

Bekannt sind auch Mischungen von Polycarbonaten mit Elastomeren auf Basis Acrylsäurealkylestern bzw. Methylmethacrylaten (siehe US-PS 3 742 088 und DE-OS 2 303 190).

Bekannt sind weichmacherhaltige Mischungen von Polycarbonaten mit speziellen Acrylat- und Methacrylat-Copolymeren (siehe PCT/US 79/00 465 = WO 80/00 153 = EU-OS 16 124).

Bekannt sind auch Polycarbonat-Polyester-Abmischungen mit speziellen Acrylaten (siehe US-PS 4 257 937 und US-PS 4 264 487).

Bekannt sind auch Pfropfpolymere bzw. Verbundpolymere auf Acrylatbasis mit Polymethacrylaten (siehe US-PS 3 808 180, US-PS 3 562 235 und DE-OS 2 263 193), denen auch thermoplastische Polymethylmethacrylate (siehe EU-OS 45 875, US-PS 3 843 753) bzw. Polyalkylenterephthalate (siehe US-PS 4 096 202) bzw. thermoplastische Polycarbonate (siehe US-PS 4 299 928) zugemischt sein können.

Es wurde nun gefunden, daß man Polycarbonat/Poly-$C_1$-$C_4$-Alkylmethacrylat-Mischungen hoher Alterungsbeständigkeit, Thermostabilität, mit gutem Rohton, aber auch hoher Kerbschlagzähigkeit und homogenen Oberflächen dann herstellen kann, wenn man ihnen spezielle, teilchenförmige Pfropfcopolymerisate von im wesentlichen Methylmethacrylat auf vernetzte, teilchenförmige Acrylatkautschuke zumischt.

In den Mischungen liegen die Polycarbonate gemäß Komponenten (a) in Mengen von 83 bis 30 Gew.-Teilen, vorzugsweise von 75 bis 45 Gew.-Teilen vor; die Polyalkylmethacrylate gemäß Komponente (b) liegen in Mengen von 7 bis 60 Gew.-Teilen, vorzugsweise von 10 bis 40 Gew.-Teilen vor; die Pfropfcopolymerisate gemäß Komponente (c) liegen in Mengen von 10 bis 63 Gew.-Teilen, vorzugsweise von 15 bis 45 Gew.-Teilen vor; wobei vorzugsweise die Summe der Gew.-Teile der Komponenten (a), (b) und (c) jeweils 100 ist.

Erfindungsgemäß geeignete Polycarbonate gemäß Komponente (a) sind Homopolycarbonate und Copolycarbonate, denen z.B. ein oder mehrere der folgenden Diphenole zugrundeliegen:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
$\alpha,\alpha$-Bis-(hydroxyphenyl)-diisopropyl-benzole

sowie deren kernhalogenierte Verbindungen. Diese und weitere geeignete Diphenole sind z.B. in den US-Patentschriften 3 028 365, 2 999 835, 3 148 172, 2 991 273, 3 271 367, 2 999 846 und in der Monographie "H. Schnell,

Chemistry and Physics of Polycarbonates, Interscience Publishers, New York, 1964" beschrieben.

Bevorzugte Diphenole sind die der Formel I

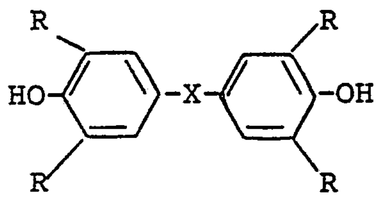

(I)

in der R gleich oder verschieden ist und H, Cl oder Br bedeutet und in der X eine Bindung, $C_1$-$C_8$-Alkylen, $C_2$-$C_8$-Alkyliden, $C_5$-$C_{15}$-Cycloalkylen, $C_5$-$C_{15}$-Cycloalkyliden, -$SO_2$- oder

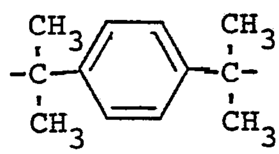

ist.

Beispiele für diese Diphenole sind:

4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan

α, α-Bis-(4-hydroxyphenyl)-p-diisopropylbenzol
2,2-Bis-(3-chlor-4-hydroxyphenyl)-propan
2,2-Bis-(3,5-dichlor-4-hydroxyphenyl)-propan und
2,2-Bis-(3,5-dibrom-4-hydroxyphenyl)-propan.

Besonders bevorzugte Bisphenole sind z.B.:

2,2-Bis-(4-hydroxyphenyl)-propan,
2,2-Bis-(3,5-dichlor-4-hydroxyphenyl)-propan
2,2-Bis-(3,5-dibrom-4-hydroxyphenyl)-propan und
1,1-Bis-(4-hydroxyphenyl)-cyclohexan.

Bevorzugte aromatische Polycarbonate sind solche, denen ein- oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Bisphenole zugrundeliegen. Besonders bevorzugt sind weiterhin Polycarbonate allein auf Basis von 2,2-Bis-(4-hydroxyphenyl)-propan.

Die aromatischen Polycarbonate können nach bekannten Verfahren hergestellt werden, so z.B. nach dem Schmelzumesterungsverfahren aus Diphenolen und Diphenylcarbonat und dem Zweiphasengrenzflächenverfahren aus Diphenolen und Phosgen, wie es in der obengenannten Literatur beschrieben ist.

Die aromatischen hochmolekularen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen

Verbindungen, insbesondere solchen mit drei oder mehr phenolischen Hydroxygruppen verzweigt sein.

Polycarbonate dieser Art sind z.B. in den deutschen Offenlegungsschriften 1 570 533, 1 595 762, 2 116 974, 2 113 347 und 2 500 092, der britischen Patentschrift 1 079 821 und der US-PS 3 544 514 beschrieben.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-heptan, 1,4,5-Tri-(4-hydroxyphenyl)-benzol, 1,1,1-Tri-(4-hydroxyphenyl)-ethan, 2,4-Bis-(4-hydroxyphenyl-isopropyl)-phenol, 2,6-Bis-(2'-hydroxy-5'-methyl-benzyl)-4-methylphenol, Hexa-(4-(4-hydroxyphenylisopropyl)-phenyl)-ortho-terephthalsäureester, Tetra-(4-hydroxyphenyl)-methan und 1,4-Bis-(4',4"-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Erfindungsgemäß geeignete $C_1$-$C_4$-Alkyl-methacrylatpolymere gemäß Komponente (b) sind bekannte Polymerisate der Methyl-, Ethyl-, Propyl- und -Butylmethacrylsäureester, vorzugsweise des Methyl- und Ethyl-methacrylsäureesters. Es sind sowohl Homopolymerisate als auch Copolymerisate dieser Methacrylsäureester zu verstehen. Darüber hinaus können bis maximal 9,5 Gew.-% andere ethylenisch ungesättigte, copolymerisierbare Monomere, bezogen jeweils auf Gesamtgewicht an diesen ungesättigten Monomeren und den Methacrylsäureestern der Komponente (b)

copolymerisiert sein, so daß die erfindungsgemäß geeigneten $C_1$-$C_4$-Alkyl-methacrylatpolymeren (b) aus 90,5 Gew.-% bis 100 Gew.-% an Alkyl-methacrylat-Einheiten und aus 9,5 Gew.-% bis 0 Gew.-% an anderen ethylenisch ungesättigten Monomereinheiten aufgebaut sind.

Andere ethylenisch ungesättigte copolymerisierbare Monomere sind beispielsweise (Meth)Acrylnitril, ($\alpha$-Methyl)-styrol, Bromstyrol, Vinylacetat, Acrylsäure-$C_1$-$C_8$-alkylester, (Meth)Acrylsäurearylester, (Meth)Acrylsäure, Ethylen, Propylen, N-Vinylpyrrolidon, Vinylsulfonsäure (salze) oder Styrolsulfonsäure(salze).

Die erfindungsgemäß geeigneten Polymeren (b) stellen in bestimmten organischen Lösungsmitteln lösliche Stoffe dar und besitzen somit einen linearen oder verzweigten Aufbau; gelhaltige Polymere, also solche mit vernetzten Strukturen, sind nicht Polymere (b) im Sinne der Erfindung.

Die Polymeren (b) können nach bekannten Polymerisationsverfahren hergestellt werden, vorzugsweise aber durch radikalische oder thermische Polymerisation. Als Polymerisationsverfahren eignen sich Verfahren in Emulsion, Masse, Suspension, Dispersion, insbesondere die Emulsions-, vorzugsweise aber die Masse- beziehungsweise Lösungspolymerisation. Die Molekulargewichte der Polymere (b) können durch bekannte verfahrensbedingte Maßnahmen beispielsweise durch Verwendung von Mercaptanen as Reglern in weiten Bereichen variiert werden. Üblicherweise be-

sitzen die erfindungsgemäß einsetzbaren Polymeren (b) derartige Molekulargewichte (beziehungsweise Staudinger-Indices, beziehungsweise Schmelzviskositäten), die deren thermoplastische Spritzguß- oder Extrusionsverarbeitung sinnvoll machen.

Erfindungsgemäß geeignete teilchenförmige Pfropfpolymerisate gemäß Komponente (c) werden durch Pfropfung von Methylmethacrylat, gegebenenfalls in Kombinationen mit bis zu 9,5 Gew.-% an anderen ethylenisch ungesättigten, copolymerisierbaren Monomeren, bezogen auf Gesamtgewicht an Pfropfmomoneren bestehend aus Methylmethacrylat und diesen anderen Monomeren, auf einen teilchenförmigen vernetzten Alkyl-acrylat-kautschuk hergestellt, wobei die Gewichtsverhältnisse von Pfropfmonomeren (100 bis 90,5 Gew.-% Methylmethacrylat + 0 bis 9,5 Gew.-% dieser anderen Monomeren): Alkylacrylatkautschukgrundlage zwischen 20 Gew.-% : 80 Gew.-% und 80 Gew.-% : 20 Gew.-%, vorzugsweise zwischen 40 Gew.-% : 60 Gew.-% und 60 Gew.-% : 40 Gew.-% liegen können.

Die in Rede stehenden anderen, ethylenisch ungesättigten copolymerisierbaren Pfropfmonomeren zur Herstellung der Pfropfpolymerisate gemäß Komponente (c) sind die bereits für die Herstellung der Komponente (b) genannten, vorzugsweise sind es Styrol, Acrylnitril, $\alpha$-Methylstyrol, Vinylacetat, Alkylacrylate sowie Aryl-(meth)acrylate. Beispielsweise seien genannt Butyl-methacrylat, Ethylmethacrylat, Butyl-acrylat und Phenyl-methacrylat.

Die teilchenförmigen, vernetzten Alkylacrylatkautschuke, die als Pfropfkautschukgrundlage zur Herstellung der Pfropfpolymerisate der Komponente (c) verwendet wurden, sind teilchenförmige, vernetzte Homopolymerisate eines $C_{1-8}$-Alkyl-acrylesters, beispielsweise von Ethyl-, Octyl-, 2-Ethylhexyl-, Methyl-, Butyl- oder Hexylacrylat, oder eines entsprechenden Copolymerisates mit bis zu 40 Gew.-% anderer Vinylmonomerer, wie Styrol, Acrylnitril, Methylmethacrylat oder Vinylester. Die $C_1$-$C_8$-Alkyl-acrylester können zur Herstellung des Alkylacrylatkautschuks auch in Mischung miteinander eingesetzt werden, die Kautschuke können somit auch Copolymerisate verschiedenen Alkyl-acrylsäureester sein.

Zur Vernetzung des Acrylatkautschuks werden polyfunktionelle Monomere copolymerisiert. Diese erfindungsgemäß zu verwendenden Monomeren sind insbesondere cyclische Verbindungen, die mindestens 3 gleich schnell polymerisierende ethylenisch-ungesättigte Gruppen besitzen. Bevorzugt sind Triallylcyanurat, Triallylisocyanurat, Trivinylcyanurate, Triallylbenzole, Trivinylbenzole, 1,3,5-Triacryloylhexahydro-s-triazin, besonders bevorzugt sind stickstoffhaltige Monomere, wie zum Beispiel Triallylcyanurat und Triallylisocyanurat.

Die Menge an vernetzenden Monomeren im Acrylatkautschuk ist relativ gering und beträgt 0,05 Gew.-% bis 0,99 Gew.-%, insbesondere 0,1 Gew.-% bis 0,6 Gew.-%, bezogen auf Gesamtgewicht des vernetzten Acrylatkautschuks. Der Kautschuk besteht aus Teilchen eines mittleren Teilchendurchmessers $\geq$ 0,3 µ, bevorzugt $\geq$ 0,45 µ, und hat einen Gelgehalt von

mindestens 65 Gew.-%, vorzugsweise mindestens 75 Gew.-% (gemessen in Tetrahydrofuran bei 25°C). Derartige teilchenförmige, vernetzte Alkylacrylatkatuschuke sind bekannt. /Zur Bestimmung des Gelgehaltes und der Teilchengrößen siehe M.Hoffmann, H. Krömer, R.Kuhn, Polymeranalytik I und II, Georg Thieme Verlag, Stuttgart, 1977/. Die erfindungsgemäß zu verwendenden teilchenförmigen, vernetzten Alkylacrylatkautschuke haben eine Glasübergangstemperatur $\leqq$ 0°C, insbesondere $\leqq$ -20°C.

Derartige vernetzte Alkylacrylatkautschuke werden vorzugsweise in Emulsion hergestellt und fallen zum Beispiel als Latex an, der dann zur Pfropfpolymerisation mit Methylmethacrylat und gegebenenfalls mit den anderen, ethylenisch ungesättigten copolymerisierbaren Pfropfmonomeren in bekannter Weise eingesetzt wird.

Bevorzugte, erfindungsgemäß zu verwendende, teilchenförmige Pfropfpolymerisate gemäß Komponente (c) sind solche, die innerhalb des vernetzten Alkyl-acrylatkautschuks einen stark vernetzten Dienkautschuk als Kern enthalten; somit ist der Alkyl-acrylatkautschuk die erste Hülle, der als zweite Hülle das vorstehend für die Komponente (c) bereits beschriebene, durch Pfropfpolymerisation von Methacrylsäuremethylester, gegebenenfalls in Kombination mit bis zu 9,5 Gew.-% anderen, ethylenisch ungesättigten copolymerisierbaren Monomeren, hergestellte Polymerisat aufgepfropft enthält. Die Summe der Pfropfmonomeren besteht also wiederum aus 100 bis 90,5 Gew.-% Methylmethycrylat und 0 bis 9,5 Gew.-% andere, ethylenisch ungesättigter, copolymerisierbarer Monomeren.

Der mittlere Teilchendurchmesser des Dienkautschuks beträgt $\gtrsim$ 0,08µ, insbesondere 0,1 - 0,2µ, unter Einbeziehung der Alkyl-acrylatkautschuk-Hülle beträgt der mittlere Teilchendurchmesser $\geq$ 0,3µ, insbesondere $\geq$ 0,45µ.

Das Gewichtsverhältnis des Dienkautschuk-Kerns in Pfropfpolymerisat (c) zu der ersten Hülle in Pfropfpolymerisat (c) ist von 0,1 zu 99,9 bis 10 zu 90, bevorzugt 0,2 zu 99,8 bis 5 zu 95; der Anteil der zweiten Hülle am gesamten Pfropfpolymerisat (c) kann von 30 Gew.-% bis 70 Gew.-%, bevorzugt von 40 Gew.-% bis 60 Gew.-% liegen. Die Pfropfpolymerisate (c) haben mittlere Teilchendurchmesser $\geq$ 0,3 µ, bevorzugt $\geq$ 0,45 µ. Besonders bevorzugte Teilchendurchmesser sind $\geq$ 0,5 µ (ermittelt durch Lichtstreuung).

Das Material des Dienkautschuk-Kerns ist entweder ein vernetzter Kautschuk aus einem oder mehreren konjugierten Dienen, wie Butadien, oder ein vernetzter Copolymerisat eines konjugierten Dien mit einem ethylenisch-ungesättigten Monomer, wie Styrol und/oder Acrylnitril. Die Vernetzung erfolgt radikalisch während der Herstellung der Dienkautschukkerns, z.B. durch Emulsionspolymerisation von Dien enthaltenden Monomeren oder -gemischen bei höheren Temperaturen und bei hohen Monomerumsätzen, ggf. unter Zuteilnahme von polyfunktionellen Vinylmonomeren wie Divinylbenzol oder gegebenenfalls mittels nachträglicher Peroxideinwirkung.

Derartige Produkte sind bekannt (siehe beispielsweise DE 3 022 469, EP 34 748), und können charakterisiert werden durch z.B. Gelgehaltsbestimmung, Lichtstreungsmethoden, Elementaranalysen, Elektronenspektroskopie.

Die Acrylatkautschuk-Hülle stellt einen vernetzten Acrylatkautschuk dar, wie er bereits im Zusammenhang mit der Komponente (c) vorstehend beschrieben wurde. Außer den dort erwähnten $C_1$-$C_8$-Alkyl-acrylsäureestern sind auch Halogenalkyl-acrylester, vorzugsweise $C_1$-$C_8$-Halogenalkylacrylsäureester, wie Chlorethylacrylat und auch araliphatische Acrylsäureester wie Benzylacrylat und Phenethylacrylat geeignet. Sie können einzeln oder in Mischung eingesetzt werden, wobei mindestens ein Alkylacrylsäureester im Gemisch vorhanden sein soll. Die bis zu 40 Gew.-% mitzuverwendenden anderen Vinylmonomeren sind beispielsweise die bereits vorstehend für die Herstellung der Alkylacrylatkautschuke zur Herstellung der Komponente (c) angeführten Styrol, Acrylnitril, Methylmethacrylat und Vinylester.

Zur Vernetzung der Acrylatkautschuk-Hülle können beliebige polyfunktionelle Monomere copolymerisiert werden.

Außer den bereits für die Vernetzung der Alkylacrylatkautschuke genannten Vernetzer sind noch beispielsweise Ester ungesättigter Carbonsäuren von $C_2$-$C_{20}$-Polyolen, wie beispielsweise Ethylenglykol-dimethacrylat, Ester mehrbasischer Carbonsäuren mit ungesättigten Alkoholen, vorzugsweise mit ungesättigten $C_3$-$C_{12}$-Alkoholen, wie beispielsweise Triallylcyanurat oder Triallylisocyanurat,

Divinylverbindungen wie beispielsweise Divinylbenzol, Ester ungesättigter Carbonsäuren mit ungesättigten Alkoholen, vorzugsweise mit ungesättigten $C_3$-$C_{12}$-Alkoholen wie beispielsweise Allyl-methacrylat, Phosphorsäureester wie beispielsweise Triallylphosphat, und 1,3,5-Triacryloylhexahydro-s-triazin.

Besonders bevorzugte polyfunktionelle Monomere sind Triallylcyanurat, Triallylisocyanurat, Triallylphosphat, Allylmethacrylat, Ethylenglykoldimethacrylat und 1,3,5-Triacryloylhexahydro-s-triazin.

Die Menge der zur Vernetzung benutzten polyfunktionellen Monomeren ist bevorzugt 0,05 bis 10 Gew.-%, insbesondere 0,1 bis 5,0 Gew.-%, des Gesamtgewichts der vernetzten Alkyl-acrylat-kautschuk-Hülle.

Die zweite Hülle besteht aus polymerisierten Methylmethacrylat, gegebenenfalls im Gemisch mit bis zu 9,5 Gew.-% copolymerisierten anderen, ethylenisch ungesättigten Monomeren, vorzugsweise Styrol, Acrylnitril, α-Methylstyrol, Vinylacetat, Alkylacrylat und/oder Aryl-(meth)acrylate, wie dies bereits für die Herstellung der Pfropfpolymerisate gemäß Komponente (c) beschrieben ist.

Wiederum kommen also 100 Gew.-% bis 90,5 Gew.-% aus Methylmethacrylat und 0 Gew.-% bis 9,5 Gew.-% an diesen anderen, ethylenisch ungesättigten, copolymerisierbaren Monomeren, bezogen auf Gesamtgewicht dieser Pfropfmonomeren, für die Bildung der zweiten Hülle in Frage.

Diese bekannten, erfindungsgemäß bevorzugt zu verwendenden, teilchenförmigen Pfropfcopolymerisate gemäß Komponente (c) können zum Beispiel in wäßriger Emulsion wie folgt hergestellt werden: Zunächst wird durch Emulsionspolymerisation eines konjugierten Diens der Dienkautschuk für den Kern (1) in Latexform hergestellt und z.B. gleichzeitig wenigstens partiell vernetzt. Die Polymerisation ist bekannt. Dann wird in Gegenwart des Dienkautschuklatex, ebenfalls in wäßriger Emulsion, der Acrylatkautschuk für die erste Hülle hergestellt, indem man die Monomeren (Hauptbestandteil wenigstens ein Alkyl-Acrylat) in dem Latex emulgiert und in an sich bekannter Weise an radikalbildenden Initiatoren polymerisiert. Der Acrylatkautschuk polymerisiert unter wenigstens partieller Pfropfung auf den Dienkautschuk. Er kann durch Mitverwendung polyfunktioneller Monomerer bereits bei der Herstellung vernetzt werden.

Bei dieser Pfropfpolymerisation der ersten Hülle (2) muß die Bildung neuer Teilchen möglichst vollständig unterbunden werden. Ein Emulsionstabilisator muß in einer zur Oberflächenbedeckung der Teilchen erforderlichen Menge vorhanden sein. Die Größe dieser Teilchen ist durch die Reaktionsführung in weiten Grenzen zu variieren. Verwendet man als Kern (1) einen agglomerierten Latex, um große Teilchen zu erhalten, so können diese mehrere Dienkautschukpartikel enthalten. Man kann die Polymerisation der ersten Hülle (2) auch

so führen, daß Partikel mit Dienkautschukern und gleichzeitig Partikel aus reinem, vernetzten Acrylatkautschuk erzeugt werden. Auch solche Mischungen können unter besonderen Umständen zur Herstellung schlagfester Formmassen dienen.

Nach Beendigung der Pfropfpolymerisation des Acrylatkautschuks wird auf den erhaltenen Latex Methylmethacrylat, gegebenenfalls im Gemisch mit dem für den Aufbau der zweiten Hülle (3) bereits genannten Vinylmonomeren, in Emulsion polymerisiert. Dabei bilden sich Pfropfpolymerisate unter Ausbildung der zweiten Hülle (3). Bei dieser an sich bekannten Pfropfpolymerisation, die üblicherweise in Gegenwart von Radikalstartern, z.B. Wasserlöslichen Initiatoren, Emulgatoren oder Komplexbildner/Pfropfaktivatoren, sowie Reglern durchgeführt wird, bilden sich im allgemeinen neben dem Pfropfpolymerisat in bestimmten Ausmaß freie Polymerisate bzw. Copolymeriate der die zweite Hülle (3) bildenden Monomeren. Die Menge dieses ungepfropften Polymerisates kann durch den Pfropfgrad bzw. die Pfropfausbeute charakterisiert werden, sie hängt ab u.a. von den Polymerisationsbedingungen, der Zusammensetzung der ersten Hülle (2), der Größe der zu pfropfenden Teilchen, und der Menge an gepfropftem Acrylatkautschuk. "Pfropfpolymerisat" gemäß Komponente (c) im Sinne der Erfindung ist deshalb das durch Polymerisation von Vinylmonomeren in Gegenwart des Kautschuklatex erhaltene Produkt, wobei wenigstens ein Teil der Pfropfmonomeren durch chemische Reaktion aufgepfropft sein soll.

Die so hergestellten Pfropfpolymerisate (c) können nach bekannten Verfahren aufgearbeitet werden, zum Beispiel durch Koagulation der Pfropfcopolymerlatices mit Säuren, Salzen oder organischen Lösungsmitteln, durch Sprühtrocknung, durch Einwirkung von Hitze, Kälte oder Scherkräften. Nach anschließendem Trocknen der Polymerisate werden diese als pulverförmige Substanzen erhalten.

Die Einzelkomponenten (a), (b) und (c) können über Schneckenmaschinen (z.B. Doppelwellenschnecken) oder Knetaggregaten zu den erfindungsgemäßen Formmassen compoundiert werden; dabei kann man zum Beispiel so vorgehen, daß man alle drei Komponenten gleichzeitig compoundiert oder daß man eine der Komponenten (zum Beispiel das Polycarbonat) mit einem Präcompound der anderen beiden Komponenten compoundiert; als Präcompound bezeichen wir auch eine Pulvermischung aus den Komponenten (b) und (c). Nach der Compoundierung zu den Formmassen (zum Beispiel in Form von Granulat) kann dieses Granulat zur Herstellung verschiedenster Formkörper beispielsweise durch Spritzguß- beziehungsweise Extrusionsverfahren verarbeitet werden. Derartige Formkörper kommen da besonders zum Einsatz, wo hohe Wärmeformbeständigkeit, Zähigkeit und gutes Alterungsverhalten gefordert wird, wo also der bisherige Einsatz von Polycarbonat-Polymethacrylat-Abmischungen oder von Polycarbonat-ABS-Polymer-Abmischungen noch nicht voll befriedigt.

Die erfindungsgemäßen Formmassen enthalten gegebenenfalls noch Antioxidantien, Gleitmittel, Pigmente, Farbstoffe, Trennmittel, UV-Stabilisatoren, Thermo-Stabilisatoren für Polycarbonate etc.

Die erfindungsgemäßen Formmassen besitzen eine außergewöhnliche Stabilität gegen verschiedenste Alterungsvorgänge; solche Stabilitäten werden zum Beispiel bei bekannten Systemen aus Polycarbonaten und ABS-Polymeren nicht erreicht.

Für anwendungstechnische Einsatzgebiete, bei denen keine extreme, sondern nur eine mittlere, aber immer noch gegenüber Systemen aus Polycarbonat + ABS-Polymeren verbesserte Alterungsbeständigkeit gefordert wird, ist es auch möglich, die erfindungsgemäßen Formmassen durch den Zusatz von thermoplastischen ABS-Polymerisaten oder von thermoplastischen SAN-Harzen zu verschneiden.

Gegenstand der vorliegenden Erfindung sind somit auch thermoplastische Formmassen auf Basis von thermoplastischen ABS-Harzen oder thermoplastischen SAN-Harzen, die mindestens 60 Gew.-% an erfindungsgemäßen Dreiermischung bestehend aus den Komponenten (a) + (b) + (c) enthalten.

Beispiele

I. Vorschrift zur Herstellung des verwendeten Polycarbonates (a)

Ca. 454 Teile 4,4'-Dihydroxydiphenyl-2,2-propan und 9,5 Teile p-tert.-Butylphenyl werden in 1,5 l Wasser suspendiert. In einem 3-Halskolben, ausgestattet mit Rührer und Gaseinleitungsrohr, wird der Sauerstoff aus der Reaktionsmischung entfernt, indem unter Rühren 15. min. lang Stickstoff durch die Reaktionsmischung geleitet wird. Dann werden 355 Teile 45 %-iger Natronlauge und 1000 Teile Methylenchlorid zugegeben. Die Mischung auf 25°C abgekühlt. Unter Aufrechterhaltung dieser Temperatur durch Kühlen werden 237 Teile Phosgen während einer Zeitdauer von 120 min. zugegeben. Eine zusätzliche Menge von 75 Teilen einer 45 %igen Natronlauge wird nach 15 - 30 Minuten zugegeben bzw. nachdem die Phosgenaufnahme begonnen hat. Zu der entstandenen Lösung werden 1,6 Teile Triäthylenamin zugegeben und die Mischung weitere 15 min. gerührt. Eine hochviskose Lösung wird erhalten deren Viskosität durch Zugabe von Methylenchlorid reguliert wird. Die wäßrige Phase wird abgetrennt. Die organische Phase wird mit Wasser, salz- und alkalifrei gewaschen. Das Polycarbonat wird aus der gewaschenen Lösung isoliert und getrocknet. Das Polycarbonat hat eine relative Viskosität von 1,29-1,30, gemessen in einer Lösung von 0,5 g in 100 ml von Methylenchlorid bei 20°C.

Das entspricht ungefähr einem Molekulargewicht von 32.000. Das so gewonnene Polycarbonat wird extrudiert und granuliert.

II. Vorschrift zur Herstellung des verwendeten Pfropfcopolymerisates (c)

1. In einem Reaktor wird unter Rühren folgende Emulsion bei 65°C bis zum praktisch vollständigen Monomerumsatz innerhalb von 22 Stunden polymerisiert:

| | | |
|---|---|---|
| 90 | Gew.-Tl. | Butadien |
| 19 | " | Styrol |
| 1,8 | " | Na-Salz der disproportionierten Abietinsäure |
| 0,257 | " | Natriumhydroxid |
| 0,3 | " | n-Dodecylmercaptan |
| 1,029 | " | Na-Ethylendiamintetraacetat |
| 0,023 | " | Kaliumpersulfat |
| 176 | " | Wasser |

Es wird ein Latex erhalten, der Butadien/Styrol-Copolymerisatteilchen eines mittleren Durchmessers von 0,1 μ in einer Konzentration von ca. 35 bis 36 % enthält.

2. Herstellung von Acrylatkautschukteilchen, die Polydienkerne enthalten (Kern (1) mit Hülle (2))

In einem Reaktor wird unter Rühren bei 65°C folgende Mischung vorgelegt:

| | | |
|---|---|---|
| 45 | Gew.-Tl. | Latex (1) |
| 2800 | " | Wasser |
| 8 | " | Kaliumpersulfat |

Innerhalb von 5 Stunden werden bei 65°C folgende Mischungen in den Reaktor getrennt eindosiert:

| | | | |
|---|---|---|---|
| Mischung A: | 3013 | Gew.-Tl. | n-Butylacrylat |
| | 6 | " | Triallylcyanurat |
| Mischung B: | 2134 | " | Wasser |
| | 41 | " | Na-Sulfat von C 14-C 18-Kohlenwasserstoffen. |

Anschließend läßt man 4 Stunden bei 65°C auspolymerisieren. Die gebildeten Polymerisate besitzen Gelgehalte von 80 bis 88 Gew.-% und mittlere Teilchendurchmesser von 0,55 µ; der Latex besitzt einen Polymerfeststoff von 37,7 %. Die Glasübergangstemperatur beträgt -55°C, bestimmt durch Modul/Temperatur-Messungen.

3. <u>Herstellung eines Pfropfcopolymerisates</u>

In einem Reaktor wird bei 65°C folgende Mischung vorgelegt:

| | | |
|---|---|---|
| 4400 | Gew.-Tl. | Latex (2) |
| 720 | " | Wasser |
| 5 | " | Kaliumpersulfat |

Bei 70°C werden innerhalb von 4 Stunden getrennt folgende Zuläufe eindosiert:

Zulauf 1: 1100 Gew.-Tl. Methylmethacrylat
Zulauf 2: 1430 " Wasser
16 " Na-Sulfonat von C 14-C 18-Kohlenwasserstoffen

Anschließend wird 4 Stunden bei 70°C nachgerührt. Der auspolymerisierte Latex ist 36 %ig in Bezug auf Polymerfeststoff.

Der gebildete Latex des Pfropfcopolymerisates aus 60 Tl. Kautschuk und 40 Tl. Methylmethacrylat wird durch Koagulation mit Bittersalzlösung isoliert und getrocknet.

III. <u>Das verwendete Polymer (b)</u>

In dem speziellen Fall wurde ein in Masse polymerisiertes Methylmethacrylatpolymerisat mit einem Schmelzindex MFI (230/3,8) von ca. 6,0 (g/10 min.) (DIN 53 735) eingesetzt. Die Herstellung solcher Produkte ist bekannt; ihr kommerzieller Erwerb ist möglich.

IV. <u>Produkte für Vergleichsbeispiele</u>

1) Als Polymer (b) wurde vergleichsweise ein SAN-Harz mit einem Acrylnitrilgehalt von 28 Gew.-% und einem Staudingerindex $[\eta]_{DMF}$ (bei 25°C) von 0,80 eingesetzt.

2) Als Ersatz beider Komponente (b) und (c) wurde außerdem mit einem ABS-Harz mit einem Kautschukgehalt von 30 Gew.-% gearbeitet.

3) Es wurde ein ABS-Polymer mit einem Kautschukgehalt von 50 Gew.-% eingesetzt.

V. Formmassenherstellung und -eigenschaften

In einem Compoundierkneter werden bei einer Temperatur von 240°C folgende Komponenten in den angegebenen Gew.-Teilen compoundiert:

| Mi- schung | Polycar- bonat I Gew.-Tl. | Pfropfpoly- mer II 3) Gew.-Tl. | Polymer III Gew.-Tl. | Polymer IV 1) Gew.-Tl. | Polymer IV 2) Gew.-Tl. | Polymer IV 3) Gew.-Tl. |
|---|---|---|---|---|---|---|
| 1 | 60 | 20 | 20 | - | - | - |
| 2 | 60 | 20 | - | 20 | - | - |
| 3 | 60 | - | - | - | 40 | - |
| 4 | 60 | - | 16 | - | - | 24 |

Mechanische Eigenschaften

| Mischung | 1 | 2 | 3 | 4 |
|---|---|---|---|---|
| Kerbschlagzähigkeit (23°C) bei einer Massetemperatur beim Spritzguß von 260°C (kJ/m²) | 36 | 36 | 39 | 32 |
| und 300°C (" ) | 34 | 21 | 16 | 7 |
| nach DIN 53453 | | | | |
| Reißfestigkeit nach DIN 53 455 (MPa) | 65 | 50 | 46 | - |
| Reißdehnung nach DIN 53 455 (%) | 99 | 101 | 71 | - |
| Zug-E-Modul nach DIN 53 455 (MPa) | 2159 | 2969 | 2219 | - |
| Schlagzähigkeit (23°C) nach DIN 53 454 (kJ/m²) | n.g. | n.g. | n.g. | - |
| Vicat-B-Temperatur nach DIN 53 460 (°C) | 123 | 119 | 120 | - |

Wie aus obiger Tabelle hervorgeht, sind bei allen hergestellten Compounds die mechanischen Eigenschaften nahezu identisch, aber mit Ausnahme der Kerbschlagzähigkeitswerte an Formkörpern, die bei 300°C Massetemperatur durch Spritzgußverarbeitung hergestellt wurden: Der erfindungsgemäße Compound 1 (Mischung 1) besitzt dann eine beträchtlich höhere Kerbschlagzähigkeit als andere Mischungen, die anteilsmäßig SAN-Harz oder ABS-Polymerisat enthalten; auch die Polymethylmethacrylat-Mischung 4 weist in Kombination mit ABS-Pfropfpolymer IV 3) sehr niedrige Kerbschlagzähigkeiten (ca. 7 $kJ/m^2$) auf.

Die bei einer Massetemperatur von 260°C hergestellten Formkörper wurden außerdem einer Temperaturalterung bei 110°C unterworfen (Lagerung bei 110°C; in Abhängigkeit

0089540

von der Lagerzeit sind die mechanischen Eigenschaften der Prüfkörper angegeben):

| Mischung | 1 | | | | 2 | | | | 3 | | | |
|---|---|---|---|---|---|---|---|---|---|---|---|---|
| Lagerzeit (Std.) | 0 | 100 | 400 | 800 | 0 | 100 | 400 | 800 | 0 | 100 | 400 | 800 |
| Reißfestigkeit (MPa) | 65 | - | 57 | - | 50 | - | 49 | - | 46 | - | 48 | - |
| Bruchdehnung (%) | 99 | - | 43 | - | 101 | - | 16 | - | 71 | - | 16 | - |
| Kerbschlagzähigkeit | 36 | 32 | 31 | 28 | 36 | 29 | 22 | 20 | 39 | 22 | 20 | 15 |

Wie obige Übersicht demonstriert, besitzt die Mischung 1 eine wesentlich verbesserte Thermostabilität (Kerbschlagzähigkeit in Abhängigkeit von der Lagertemperatur) als die anderen Mischungen. Dieses verbesserte Alterungsverhalten macht sich auch in einem schwächeren Abfall der Reißdehnung bemerkbar.

0089540

Patentansprüche

1. Mischungen aus

(a) thermoplastischen, aromatischen Polycarbonaten mit $\bar{M}w$ (Gewichtsmittelmolekulargewicht) von 10 000 bis 200 000,

(b) thermoplastischen Polymerisaten von $C_1$-$C_4$-Alkylestern der Methacrylsäure mit $\bar{M}w$ (Gewichtsmittelmolekulargewicht) von 10000 bis 1.000000, (gemessen in DMF bei 25°C) und

(c) teilchenförmigen Pfropfpolymerisaten von Methylmethacrylat auf einen teilchenförmigen, hochvernetzten Acrylsäurealkylester-Kautschuk, der gegebenenfalls noch einen vernetzten Dienkautschuk als inneren Kern enthalten kann, dadurch gekennzeichnet, daß die Komponente (a) in Mengen von 83 bis 30 Gew.-Teilen, die Komponente (b) in Mengen von 7 bis 60 Gew.-Teilen und die Komponente (c) in Mengen von 10 bis 63 Gew.-Teilen vorliegt.

2. Mischungen gemäß Anspruch 1, dadurch gekennzeichnet, daß die Komponente (a) in Mengen von 75 bis 45 Gew.-Teilen, die Komponente (b) in Mengen von 10 bis 40 Gew.-Teilen und die Komponente (c) in Mengen von 15 bis 45 Gew.-Teilen vorliegt.

3. Mischungen gemäß Ansprüche 1 und 2, dadurch gekennzeichnet, daß die Komponente (b) aus Copolymerisaten von $C_1$-$C_4$-Alkyl-methacrylaten mit bis maximal 9,5 Gew.-%, bezogen auf Gesamtgewicht der Methacrylate und anderen, ethylenisch ungesättigten, copolymerisierbaren Monomeren, anderen ethylenisch ungesättigten, copolymerisierbaren Monomeren besteht.

4. Mischungen gemäß Ansprüche 1 und 2, dadurch gekennzeichnet, daß die teilchenförmigen Pfropfpolymerisate (c) durch Polymerisation von 100 bis 90,5 Gew.-% Methacrylsäuremethylester und 0 bis 9,5 Gew.-% an anderen, ethylenisch ungesättigten copolymerisierbaren Monomeren, bezogen auf Gesamtgewicht an Pfropfmomomeren hergestellt sind.

5. Mischungen gemäß Ansprüche 1, 2 und 4, dadurch gekennzeichnet, daß das Gewichtsverhältnis von Pfropfmonomeren: Alkylatkautschukgrundlage in Komponente (c) zwischen 20 Gew.-% : 80 Gew.-% und 80 Gew.-% : 20 Gew.-% liegt.

6. Mischungen gemäß Ansprüche 1 bis 5, dadurch gekennzeichnet, daß das Gewichtsverhältnis des Dienkautschukkerns zur Acrylatkautschuk-Hülle von 0,1 : 99,9 bis 10 : 90 ist, und daß der Anteil der zweiten Hülle am gesamten Pfropfpolymerisat (c) von 30 Gew.-% bis 70 Gew.-% liegen kann.

7. Thermoplastische Formmassen auf Basis von thermoplastischen ABS-Harzen oder thermoplastischen SAN-Harzen, dadurch gekennzeichnet, daß sie mindestens 60 Gew.-% an den Mischungen der Ansprüche 1 bis 6 enthalten.

8. Verfahren zur Herstellung von Mischungen aus (a) thermoplastischen, aromatischen Polycarbonaten mit $\bar{M}w$ (Gewichtsmittelmolekulargewicht) von 10 000 bis 200 000, (b) thermoplastischen Polymerisaten von $C_1$-$C_4$-Alkylestern der Methacrylsäure mit $\bar{M}w$ (Gewichtsmittelmolekulargewicht) von 10 000 bis 1 000 000 (gemessen in DMF bei 25°C) und (c) teilchenförmigen Pfropfpolymerisaten von Methylmethacrylat auf einen teilchenförmigen, hochvernetzten Acrylsäurealkylester-Kautschuk, der gegebenenfalls noch einen vernetzten Dienkautschuk als inneren Kern enthalten kann, dadurch gekennzeichnet, daß man die teilchenförmigen Pfropfpolymerisate (c) durch Pfropfung von Methylmethacrylat, gegebenenfalls in Kombination mit bis zu 9,5 Gew.-% an anderen ethylenisch ungesättigten, copolymerisierbaren Monomeren, bezogen auf Gesamtgewicht an Pfropfmonomeren bestehend aus Methylmethacrylat und diesen anderen Monomeren, auf einen teilchenförmigen vernetzten Alkyl-acrylat-Kautschuk, der gegebenenfalls einen vernetzten Dienkautschuk als inneren Kern enthalten kann, herstellt, und diese mit den nach bekannten Polykondensationsverfahren hergestellten thermoplastischen, aromatischen Polycarbonaten gemäß Komponente (a) und den nach bekannten Polymerisationsverfahren hergestellten thermoplastischen Polymerisaten von $C_1$-$C_4$-Alkylestern der Meth-

acrylsäure gemäß Komponente (b) über Schneckenmaschinen oder Knetaggregaten in den erfindungsgemäßen Formmassen compoundiert, wobei man die Komponente (a) in Mengen von 83 bis 30 Gew.-Teilen, die Komponente (b) in Mengen von 7 bis 60 Gew.-Teilen und die Komponente (c) in Mengen von 10 bis 63 Gew.-Teilen einsetzt.

Europäisches Patentamt

# EUROPÄISCHER RECHERCHENBERICHT

0089540
Nummer der Anmeldung

EP 83 10 2203

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | DE-A-2 037 419 (MITSUBISHI) * Ansprüche 1-11; Seite 7, Zeile 24; Seite 8, Zeilen 1-3 * --- | 1-8 | C 08 L 69/00 |
| D,A | US-A-3 742 088 (CHARLES B. HOLDER et al.) * Ansprüche 1-5 * --- | 1 | |
| A | EP-A-0 036 127 (MOBAY) * Ansprüche 1-3 * ----- | 1 | |
| | | | RECHERCHIERTE SACHGEBIETE (Int. Cl. ³) |
| | | | C 08 L 69/00 |

Der vorliegende Recherchenbericht wurde für alle Patentansprüche erstellt.

| Recherchenort | Abschlußdatum der Recherche | Prüfer |
|---|---|---|
| DEN HAAG | 17-06-1983 | DECOCKER L. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument